# EUROPÄISCHE PATENTANMELDUNG

(11) **EP 3 926 815 A1**
(43) Veröffentlichungstag der Anmeldung: **22.12.2021**
(21) Anmeldenummer: 21169929.3
(22) Anmeldetag: 22.04.2021
(51) Int. Cl.: H02P 6/32, H02K 11/30, H02M 1/00

(54) **WECHSELRICHTER**

(30) Priorität: 18.06.2020 DE 102020116161
(71) Anmelder: Audi AG, 85045 Ingolstadt (DE)
(72) Erfinder: Apelsmeier, Andreas, 85131 Pollenfeld (DE); Brüske, Stephan, 85049 Ingolstadt (DE)

(57) **Zusammenfassung**

Die Erfindung betrifft einen Wechselrichter (20) für eine elektrische Maschine (10), die als Komponenten einen Rotor (2) und einen Stator (4) aufweist, wobei der Wechselrichter (20) einen DC/AC-Wandler (8) und einen DC/DC-Wandler (6) aufweist, wobei der DC/AC-Wandler (8) mindestens einen Chip aus Siliziumcarbid mit mindestens einem MOSFET und der DC/DC-Wandler (6) mindestens einen Chip aus Silizium mit mindestens einem IGBT aufweist, wobei der DC/DC-Wandler (6) mit einer ersten der beiden Komponenten der elektrischen Maschine (10) und der DC/AC-Wandler (8) mit einer zweiten der beiden Komponenten der elektrischen Maschine (10) verbindbar ist.

## Beschreibung

Die Erfindung betrifft einen Wechselrichter für eine elektrische Maschine und ein Verfahren zum Austauschen von elektrischer Energie zwischen einem elektrischen Energiespeicher und einer elektrischen Maschine.

Einer elektrischen Maschine wird aus einer elektrischen Energiequelle elektrische Energie als Strom bzw. als Spannung bereitgestellt. Dabei kann es erforderlich sein, den Strom bzw. die Spannung an Bedürfnisse der elektrischen Maschine anzupassen.

Ein Wechselrichter ist aus der Druckschrift DE 10 2013 114 271 A1 bekannt.

Die Druckschrift EP 3 217 535 A1 beschreibt eine Antriebseinrichtung für einen Motor.

Eine Halbleiter-Leistungseinrichtung ist aus der Druckschrift US 2014/184303 A1 bekannt.

Vor diesem Hintergrund war es eine Aufgabe, eine elektrische Maschine effizient mit elektrischer Energie zu versorgen.

Diese Aufgabe wird durch einen Wechselrichter und ein Verfahren mit den Merkmalen der unabhängigen Patentansprüche gelöst. Ausführungsformen des Wechselrichters und des Verfahrens gehen aus den abhängigen Patentansprüchen und der Beschreibung hervor.

Der erfindungsgemäße Wechselrichter ist für eine elektrische Maschine ausgebildet, die als Komponenten einen Rotor und einen Stator aufweist. Der Wechselrichter weist einen DC/DC-Wandler bzw. einen Gleichstrom/Gleichstrom-Wandler bzw. je nach Definition einen Gleichspannungs/Gleichspannungs-Wandler und einen DC/AC-Wandler bzw. einen Gleichstrom/Wechselstrom-Wandler bzw. je nach Definition einen Gleichspannungs/Wechselspannungs-Wandler auf. Dabei weist der DC/AC-Wandler mindestens einen Chip aus Siliziumcarbid (SiC) mit mindestens einem MOSFET (Metal Oxide Semiconductor Field-Effect Transistor) bzw. einem Metall-Oxid-Halbleiter-Feldeffekttransistor, insbesondere mindestens einen SiC-MOSFET, auf. Der DC/DC-Wandler weist mindestens einen Chip aus Silizium mit mindestens einem IGBT (Insulated Gate Bipolar Transistor) und somit mit einem Bipolartransistor mit isolierter Gate-Elektrode, insbesondere mindestens einen Si-IGBT auf. Dabei ist der DC/DC-Wandler mit dem IGBT auf Si-Basis mit einer ersten der beiden Komponenten der elektrischen Maschine und der DC/AC-Wandler mit dem MOSFET auf SiC-Basis mit einer zweiten der beiden Komponenten der elektrischen Maschine verbindbar, zu verbinden bzw. verbunden.

In Ausgestaltung ist der DC/DC-Wandler des Wechselrichters mit dem Rotor als definitionsgemäß erster Komponente der elektrischen Maschine und der DC/AC-Wandler des Wechselrichters mit dem Stator als definitionsgemäß zweiter Komponente der elektrischen Maschine verbindbar bzw. verbunden. In möglicher alternativer Ausgestaltung ist es denkbar, dass der DC/DC-Wandler des Wechselrichters mit dem Stator als definitionsgemäß erster Komponente der elektrischen Maschine und der DC/AC-Wandler des Wechselrichters mit dem Rotor als definitionsgemäß zweiter Komponente der elektrischen Maschine verbindbar bzw. verbunden ist.

Der Wechselrichter ist für eine elektrische Maschine ausgebildet, die als fremderregte Synchronmaschine (FSM) ausgebildet ist. Außerdem kann der Wechselrichter als Pulswechselrichter ausgebildet sein bzw. bezeichnet werden.

Der DC/DC-Wandler weist zwei Gleichstromanschlüsse auf, wobei einer dieser beiden Anschlüsse davon als Eingang und der andere als Ausgang ausgebildet sein bzw. bezeichnet werden kann. Der DC/AC-Wandler weist einen Gleichstromanschluss und einen Wechselstromanschluss auf, wobei einer dieser beiden Anschlüsse davon als Eingang und der andere als Ausgang ausgebildet sein bzw. bezeichnet werden kann. Dabei ist jeweils ein erster Gleichstromanschluss des DC/DC-Wandlers und ein Gleichstromanschluss des DC/AC-Wandlers mit einer elektrischen Gleichstromquelle bzw. Gleichspannungsquelle als elektrische Energiequelle verbindbar, zu verbinden bzw. verbunden. Außerdem ist ein zweiter Gleichstromanschluss des DC/DC-Wandlers mit der ersten Komponente der elektrischen Maschine, also mit dem Rotor oder mit dem Stator, verbindbar, zu verbinden bzw. verbunden. Der Wechselstromanschluss des DC/AC-Wandlers ist mit der zweiten Komponente, also mit dem Stator oder mit dem Rotor, der elektrischen Maschine verbindbar, zu verbinden bzw. verbunden.

Das erfindungsgemäße Verfahren ist zum Austauschen elektrischer Energie zwischen einer elektrischen Maschine und einer elektrischen Energiequelle mit einem Wechselrichter, bspw. einer Ausführungsform des voranstehend vorgestellten Wechselrichters, vorgesehen. Die elektrische Maschine weist als Komponenten einen Rotor und einen Stator auf, wobei der Wechselrichter einen DC/DC-Wandler und einen DC/AC-Wandler aufweist. Dabei weist der DC/AC-Wandler mindestens einen Chip aus Siliziumcarbid mit mindestens einem MOSFET (Metall-Oxid-Halbleiter-Feldeffekttransistor) und der DC/DC-Wandler mindestens einen Chip aus Silizium mit mindestens einem IGBT (Bipolartransistor mit isolierter Gate-Elektrode) auf. Der Wechselrichter wird einerseits mit der elektrischen Energiequelle verbunden, wobei jeweils ein Gleichstromanschluss jeweils eines der beiden Wandler mit der elektrischen Energiequelle verbunden wird. Andererseits wird der DC/DC-Wandler, hier dessen weiterer Gleichstromanschluss bzw. Gleichspannungsanschluss, mit einer ersten der beiden Komponenten, also dem Rotor oder dem Stator, der elektrischen Maschine und der DC/AC-Wandler, hier dessen Wechselstromanschluss bzw. Wechselspannungsanschluss, mit einer zweiten der beiden Komponenten, also dem Stator oder dem Rotor, der elektrischen Maschine verbunden. Ferner ist es denkbar, dass der Wechselrichter zusätzliche Schalter aufweisen kann, mit denen es wahlweise möglich ist, den DC/DC-Wandler mit dem Rotor oder mit dem Stator und den DC/AC-Wandler wahlweise mit dem Stator oder mit dem Rotor zu verbinden.

Das Verfahren ist in Ausgestaltung für eine elektrische Energiequelle, die als Gleichstromquelle ausgebildet ist, vorgesehen, wobei mit dem DC/DC-Wandler ein Gleichstrom der Gleichstromquelle in einen Gleichstrom für die erste Komponente der elektrischen Maschine gewandelt wird, und wobei mit dem DC/AC-Wandler ein Gleichstrom der Gleichstromquelle in einen Wechselstrom für die zweite Komponente der elektrischen Maschine gewandelt wird. Das ist dann möglich, falls die elektrische Maschine als Motor betrieben wird und dazu ausgebildet ist, elektrische Energie aus der elektrischen Energiequelle in mechanische Energie umzuwandeln. In einer möglichen alternativen oder ergänzenden Variante kann die elektrische Maschine als Generator betrieben werden und dazu ausgebildet sein, mechanische Energie in elektrische Energie umzuwandeln, wobei zumindest elektrische Energie der zweiten Komponente der elektrischen Maschine, die als Wechselstrom bzw. als Wechselspannung bereitgestellt wird, von dem DC/AC-Wandler in einen Gleichstrom bzw. eine Gleichspannung umgewandelt und der elektrischen Energiequelle, bspw. einem elektrischen Energiespeicher, bereitgestellt wird. Die elektrische Energiequelle kann als Batterie bzw. als Akkumulator oder als Energienetz, bspw. als Bordnetz eines Fahrzeugs, ausgebildet sein.

Das Verfahren und der Wechselrichter können für eine elektrische Maschine eines Fahrzeugs verwendet bzw. eingesetzt werden, wobei das Fahrzeug mit der elektrischen Maschine weiterhin angetrieben werden kann.

In einem System, das die elektrische Maschine und den Wechselrichter aufweist, ist ein Einsatz von MOSFETs aus Siliziumcarbid (SiC) im Gleichstrom/Wechselstrom-Pfad bzw. im DC/AC-Pfad der fremderregten Synchronmaschine und von IGBTs im Gleichstrom/Gleichstrom-Pfad bzw. DC/DC-Pfad der fremderregten Synchronmaschine (FSM) vorgesehen, wodurch sich ein neuer Freiheitsgrad für die Dimensionierung der fremderregten Synchronmaschine ergibt. Die fremderregte Synchronmaschine und die zugehörige Leistungselektronik werden gemeinsam ausgelegt. Dabei ist als eine Auslegeprämisse eine Minimierung der Wechsel- bzw. AC-Ströme zur Reduktion der Chipfläche des SiC-MOSFETs vorgesehen. Als weitere Auslegeprämisse ist eine Einhaltung der thermischen Rotorverluste des Rotors der fremderregten Synchronmaschine vorgesehen, was bei Verwendung einer Rotorinnenkühlung unkritisch ist.

Durch den gemäß dem System vorgesehenen und voranstehend beschriebenen Ansatz ergibt sich die Reduktion der Chipfläche des SiC-MOSFETs und damit eine direkte Reduktion der Kosten des Wechselrichters. Außerdem ergibt sich eine Reduktion des Kupfers im Stator. Eventuell werden die Kosten für die Chipfläche des IGBTs und für den Schleifringüberträger steigen. Da jedoch Silizium um den Faktor 3 bis 5 pro mm² wesentlich preiswerter als SiC ist, sind im Wechselrichter deutliche Kostenvorteile zu erreichen. Der Gleichstrom der fremderregten Synchronmaschine wird durch das System um ca. 10% bis 20% erhöht, so dass die Schleifringüberträger etwas teurer werden. Wird jedoch die Kostenreduktion der SiC-MOSFETs und die beschriebene Kostenerhöhung zusammengefasst, dann sind auf Achsebene bzw. hinsichtlich einer durch die fremderregte Synchronmaschine anzutreibende Achse Kosteneinsparungen zu erwarten.

Nachfolgende Tabelle 1 zeigt ein mögliches Auslegebeispiel für ein System, das die elektrische Maschine, hier eine fremderregte Synchronmaschine (FSM) und den zugeordneten Wechselrichter, aufweist:

**Tabelle 1**

| | FSM-Auslegung alt | FSM-Auslegung neu |
|---|---|---|
| Strom AC | 100 A | 87,5 A |
| Strom DC-FSM | 5 A | 7 A |
| Chipfläche SiC-MOSFET | 100 mm² | 87,5 mm² |
| Chipfläche Si-IGBT | 5 mm² | 7 mm² |

Anhand des Auslegebeispiels ist zu erkennen, dass die gesamte Chipfläche kleiner wird. Unter der Voraussetzung, dass das SiC für den MOSFET ca. 50% der Kosten des Pulswechselrichters verursacht, ist unter Vernachlässigung der Erhöhung der Chipfläche des IGBTs aus Silizium beim Pulswechselrichter mit einer Kostenreduktion von ca. 6% zu rechnen.

Der vorgestellte Wechselrichter als Schaltungsteil ist für die Leistungselektronik einer Elektromaschine vorgesehen, die als elektrischer Antrieb für ein Fahrzeug, bspw. für ein Kraftfahrzeug bzw. ein Auto, verwendet wird. Mit der Leistungselektronik als Traktionswechselrichter wird die in der Regel dreiphasige Elektromaschine, bspw. fremderregte Synchronmaschine, angesteuert. Als Schalter, die zum Ansteuern verwendet werden können, werden im automotiven Wechselrichter, bspw. Traktionswechselrichter, in einem als Elektrofahrzeug ausgebildeten bzw. zu bezeichnenden Fahrzeug und/oder für Batteriespannungen größer 200 V überwiegend IGBTs oder SiC-MOSFETs eingesetzt. In dem elektrisch angetriebenen Fahrzeug kann ggf. eine Asynchronmaschine oder eine permanent-erregte Synchronmaschine zum Einsatz kommen. Für diese beiden Varianten einer Maschine kann der Pulswechselrichter als Ansteuereinheit eingesetzt werden. Wird in Ausgestaltung eine fremderregte Synchronmaschine (FSM) eingesetzt, dann ist im Pulswechselrichter zusätzlich zu dem DC/AC- bzw. Gleichstrom/Wechselstrom-Wandler der DC/DC- bzw. Gleichstrom/Gleichstrom-Wandler zur Erzeugung des Stroms für den Rotor vorgesehen.

Die IGBTs und MOSFETs werden als Leistungshalbleiter für den Wechselrichter eingesetzt.

Bei einem System, bspw. einer Antriebseinheit, mit einer Elektromaschine und einer Leistungselektronik, die für eine Spannung von 400 V ausgelegt ist, werden IGBTs aus Silizium eingesetzt. Werden diese sowohl in dem Gleichstrom/Wechselstrom-bzw. DC/AC-Wandler als auch für den DC/DC-Wandler der fremderregten Synchronmaschine (FSM) eingesetzt, wird die Antriebseinheit bezüglich einer Auslegeprämisse dahingehend dimensioniert, dass ein möglichst kleiner Gleich- bzw. DC-Strom zur Optimierung der Verluste im Rotor und zur Reduktion der Größe der Schleifringüberträger vorgesehen ist. Als weitere Auslegeprämisse ist eine entsprechende Dimensionierung der Wechsel- bzw. AC-Ströme zur Generierung eines geforderten Drehmoments vorgesehen.

Falls in dem DC/AC-Wandlungspfad des Wechselrichters SiC-MOSFETs eingesetzt werden, dann sind diese ein wesentlicher Kostenbestandteil im Wechselrichter und damit in einer gesamten anzutreibenden Achse. Mit der Auslegeprämisse, wonach der Gleichstrom (DC) für die fremderregte Synchronmaschine minimal sein soll, wird eine Chipfläche der SiC-MOSFETs maximal und kein kostenoptimales System gefunden. Das Siliziumcarbid wird aus Gründen des Wirkungsgrades im DC/AC-Wandlungspfad eingesetzt. Dies erhöht zwar grundsätzlich die Kosten, hat auf Fahrzeugebene aufgrund der geringeren Verluste, insbesondere im Teillastbetrieb, Kostenvorteile, wenn eine dafür gesparte Kapazität der Energiequelle, bspw. eine gesparte Batteriekapazität, gegenrechnet wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

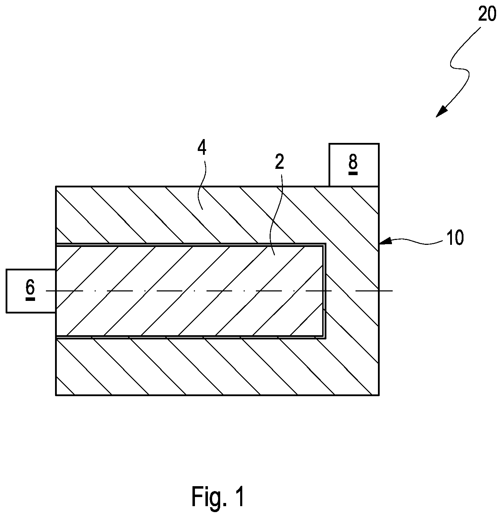

Figur 1 zeigt in schematischer Darstellung eine Ausführungsform des erfindungsgemäßen Wechselrichters zum Durchführen einer Ausführungsform des erfindungsgemäßen Verfahrens.

Figur 1 zeigt in schematischer Darstellung eine elektrische Maschine 10 bzw. Elektromaschine, die hier zum Antreiben eines Fahrzeugs, bspw. eines Kraftfahrzeugs, ausgebildet ist und als Komponenten einen Rotor 2 und einen Stator 4 aufweist, wobei hier der Rotor 2 in einem von dem Stator 4 umschlossenen Raum angeordnet ist und sich bei einem Betrieb der elektrischen Maschine 10 innerhalb des Stators 4 relativ zu dem Stator 4 dreht. Dabei ist die elektrische Maschine 10 hier als fremderregte Synchronmaschine ausgebildet.

Außerdem zeigt Figur 1 die Ausführungsform des erfindungsgemäßen Wechselrichters 20, der einen DC/DC-Wandler 6 bzw. einen Gleichstrom/Gleichstrom-Wandler und einen DC/AC-Wandler 8 bzw. einen Gleichstrom/Wechselstrom-Wandler aufweist. Hierbei ist vorgesehen, dass der Wechselrichter 20 dazu ausgebildet ist, die beiden genannten Komponenten der elektrischen Maschine 10 mit einer hier nicht weiter dargestellten elektrischen Energiequelle, bspw. einer Gleichstromquelle und/oder Gleichspannungsquelle, zu verbinden. Die elektrische Maschine 10 und der Wechselrichter 20 sind einander zugeordnet und bilden ein zusammenhängendes System.

Dabei ist ein erster Gleichstromanschluss des DC/DC-Wandlers 6 mit der elektrischen Energiequelle und ein zweiter Gleichstromanschluss des DC/DC-Wandlers 6, hier bspw. über einen Schleifringüberträger, mit dem Rotor 2 als der ersten Komponente der elektrischen Maschine 10 verbunden und dazu ausgebildet, einen Gleichstrom der elektrischen Energiequelle in einen Gleichstrom für den Rotor 2 umzuwandeln. Weiterhin ist ein Gleichstromanschluss des DC/AC-Wandlers 8 mit der elektrischen Energiequelle und ein Wechselstromanschluss des DC/AC-Wandlers 8, hier bspw. über einen Leiter, mit dem Stator 4 als der zweiten Komponente der elektrischen Maschine 10 verbunden und dazu ausgebildet, einen Gleichstrom der elektrischen Energiequelle in einen Wechselstrom für den Stator 4 umzuwandeln.

Dabei weist der DC/AC-Wandler 8 mindestens einen Chip aus Siliziumcarbid mit mindestens einem MOSFET, also je nach Definition mindestens einen MOSFET aus Siliziumcarbid, und der DC/DC-Wandler 6 mindestens einen Chip aus Silizium mit mindestens einem IGBT, also je nach Definition mindestens einen IGBT aus Silizium, auf.

### BEZUGSZEICHEN:

- 2: Rotor
- 4: Stator
- 6: DC/DC-Wandler
- 8: DC/AC-Wandler
- 10: Maschine
- 20: Wechselrichter

## Patentansprüche

1. Wechselrichter für eine elektrische Maschine (10), die als Komponenten einen Rotor (2) und einen Stator (4) aufweist, wobei der Wechselrichter (20) einen DC/AC-Wandler (8) und einen DC/DC-Wandler (6) aufweist, wobei der DC/AC-Wandler (8) mindestens einen Chip aus Siliziumcarbid mit mindestens einem MOSFET und der DC/DC-Wandler (6) mindestens einen Chip aus Silizium mit mindestens einem IGBT aufweist, wobei der DC/DC-Wandler (6) mit einer ersten der beiden Komponenten der elektrischen Maschine (10) und der DC/AC-Wandler (8) mit einer zweiten der beiden Komponenten der elektrischen Maschine (10) verbindbar ist.

2. Wechselrichter nach Anspruch 1, bei dem der DC/AC-Wandler (8) mit dem Stator (4) und der DC/DC-Wandler (6) mit dem Rotor (2) verbindbar ist.

3. Wechselrichter nach Anspruch 1 oder 2, für eine elektrische Maschine (10), die als fremderregte Synchronmaschine ausgebildet ist.

4. Wechselrichter nach einem der voranstehenden Ansprüche, der als Pulswechselrichter ausgebildet ist.

5. Wechselrichter nach einem der voranstehenden Ansprüche, bei dem jeweils ein erster Gleichstromanschluss des DC/DC-Wandlers (6) und ein Gleichstromanschluss des DC/AC-Wandlers (8) mit einer elektrischen Gleichstromquelle verbindbar ist, wobei ein zweiter Gleichstromanschluss des DC/DC-Wandlers (6) mit der ersten Komponente der elektrischen Maschine (10) verbindbar ist, und wobei ein Wechselstromanschluss des DC/AC-Wandlers (8) mit der zweiten Komponente der elektrischen Maschine (10) verbindbar ist.

6. Verfahren zum Austauschen elektrischer Energie zwischen einer elektrischen Maschine (10) und einer elektrischen Energiequelle mit einem Wechselrichter (20), wobei die elektrische Maschine (10) als Komponenten einen Rotor (2) und einen Stator (4) aufweist, wobei der Wechselrichter (20) einen DC/AC-Wandler (8) und einen DC/DC-Wandler (6) aufweist, wobei der DC/AC-Wandler (8) mindestens einen Chip aus Siliziumcarbid mit mindestens einem MOSFET und der DC/DC-Wandler (6) mindestens einen Chip aus Silizium mit mindestens einem IGBT aufweist, wobei der Wechselrichter (20) mit der elektrischen Energiequelle verbunden wird, wobei der DC/DC-Wandler (6) mit einer ersten der beiden Komponenten der elektrischen Maschine (10) und der DC/AC-Wandler (8) mit einer zweiten der beiden Komponenten der elektrischen Maschine (10) verbunden wird.

7. Verfahren nach Anspruch 6, für eine elektrische Energiequelle, die als Gleichstromquelle ausgebildet ist, wobei mit dem DC/DC-Wandler (6) ein Gleichstrom der Gleichstromquelle in einen Gleichstrom für die erste Komponente der elektrischen Maschine (10) gewandelt wird, und wobei mit dem DC/AC-Wandler (8) ein Gleichstrom der Gleichstromquelle in einen Wechselstrom für die zweite Komponente der elektrischen Maschine (10) gewandelt wird.

8. Verfahren nach Anspruch 6 oder 7 für eine elektrische Maschine (10) eines Fahrzeugs.
